# EUROPÄISCHE PATENTSCHRIFT

(11) **EP 1 092 524 B1**
(45) Veröffentlichungstag und Bekanntmachung des Hinweises auf die Patenterteilung: **26.11.2003**
(21) Anmeldenummer: 00120826.3
(22) Anmeldetag: 25.09.2000
(51) Int. Cl.: B29C 45/17, B29C 45/42

(54) **Handlingsystem für eine Kunststoff-Spritzgiessmaschine**
Handling system for a plastic injection moulding machine
Système de manipulation pour une machine à mouler par injection des matières plastiques

(30) Priorität: 14.10.1999 DE 19949566; 30.12.1999 DE 19963843
(43) Veröffentlichungstag der Anmeldung: 18.04.2001
(73) Patentinhaber: HEKUMA GmbH, 85386 Eching (DE)
(72) Erfinder: Herbst, Richard, 85386 Eching (DE)
(74) Vertreter: Klingseisen, Franz, Dipl.-Ing.

(56) Entgegenhaltungen:
- EP-A- 0 718 084
- US-A- 3 804 568

## Beschreibung

Die Erfindung betrifft ein Handlingsystem nach dem Oberbegriff des Anspruchs 1.

Ein Handlingsystem dieser Art ist aus EP-A-718 084 bekannt, wobei Kunststoffartikel durch einen quer zur Längsachse der Spritzgießmaschine verfahrbaren Arm aus den Formhohlräumen der Werkzeughälften entnommen und außerhalb von diesen auf einer horizontal bewegten Förderbahn abgelegt werden, die etwa parallel zur Längsachse der Spritzgießmaschine verläuft. Bei diesem Handlingsystem ist eine Kühlvorrichtung vorgesehen, um die entnommenen Kunststoffartikel vor dem Ablegen auf der Förderbahn zu kühlen.

Bei herkömmlichen Kunststoff-Spritzgießmaschinen fahren die Werkzeughälften in einer horizontalen Richtung auseinander. Zum Entnehmen der hergestellten Kunststoffartikel fährt nun ein Arm eines Handlingsystems seitlich in den Zwischenraum zwischen den beiden Werkzeughälften ein, wobei die Bewegungsbahn des Armes üblicherweise senkrecht zur Bewegungsbahn der Werkzeughälften verläuft. Am freien Ende des Armes sind Greifelemente, beispielsweise Saugnäpfe, angeordnet, mit denen die fertig gespritzten Kunststoffteile aus den jetzt freiliegenden Formhohlräumen entnommen werden. Der Arm des Handlingsystems fährt dann wieder zurück und übergibt die Teile an eine Umsetzplatte. Die Umsetzplatte liegt außerhalb der Spritzgießmaschine und hat eine Aufnahmefläche, die im wesentlichen in derselben Ebene liegt wie die Formhohlräume.

Da die Kunststoffartikel anschließend abgeführt werden müssen, ist ein üblicherweise in einer Horizontalebene verlaufendes Förderband vorgesehen. Um die Kunststoffartikel von der Umsetzplatte auf das Förderband zu übergeben, wird diese um eine Horizontalachse nach vorne gekippt, so daß die zuvor senkrecht stehende Oberfläche der Umsetzplatte, auf der sich die Kunststoffartikel befinden, um 90° nach unten schwenkt, so daß die Kunststoffartikel nunmehr auf das Förderband übergeben werden können.

Das bekannte Handlingsystem hat damit den Nachteil, daß die Umsetzplatte in den Bereich hinein geschwenkt werden muß, in dem sich bereits der Arm befindet. Dieser muß daher zunächst aus dem Schwenkbereich der Umsetzplatte weggefahren werden. Dies erfordert zusätzliche Zeit, so daß sich die Zykluszeit der Spritzgießmaschine erhöht.

Der Erfindung liegt daher die Aufgabe zugrunde, ein Handlingsystem der eingangs genannten Art dahingehend weiterzubilden, daß die vorstehend genannten Nachteile vermieden werden. Insbesondere soll es möglich sein, die Übergabe von der Umsetzplatte auf das Förderband so vorzunehmen, daß ein Verfahren des Armes nicht oder nur in unbedeutendem Umfang erforderlich ist. Auf diese Weise kann gegenüber dem bekannten Handlingsystem die Zykluszeit vermindert und damit die Produktivität der Spritzgießmaschine erhöht werden.

Bei einem Handlingsystem der eingangs genannten Art wird diese Aufgabe erfindungsgemäß durch die Merkmale im kenn zeichenden Teil des Anspruchs 1 gelöst.

Die der Erfindung zugrunde liegende Aufgabe wird auf diese Weise vollkommen gelöst, weil die Bewegungsbahn der Umsetzplatte so gelegt wird, daß eine Kollision mit dem Arm nicht befürchtet werden muß, wenn dieser sich in seiner zurückgezogenen Stellung befindet, in der die Greifelemente des Armes sich noch in der Position befinden, in der sie die Kunststoffartikel auf die Umsetzplatte übergeben haben. Die Kunststoffartikel werden dabei nämlich vom Arm in einer Richtung aus den Formhohlräumen entnommen, und die Bewegungsbahn der Umsetzplatte verläuft im wesentlichen entgegengesetzt zu dieser Richtung.

Da auf diese Weise ein separates Verfahren des Armes entfällt, insbesondere über eine relativ große Entfernung, wie dies beim Stand der Technik mit relativ großen Umsetzplatten erforderlich ist, wird der Handlingvorgang verkürzt, was sich in einer Verminderung der Zykluszeit der Spritzgießmaschine bemerkbar macht.

Die Erfindung läßt sich in vorteilhafter Weise bei Handlingsystemen einsetzen, bei denen in an sich bekannter Weise die erste Ebene im wesentlichen vertikal und weiter vorzugsweise die zweite Ebene im wesentlichen horizontal verläuft. Weiterhin ist die Erfindung vorteilhaft dann einsetzbar, wenn die Fördereinrichtung ein Förderband umfaßt.

Wenn nach einem weiteren Ausführungsbeispiel der Erfindung die Kunststoffartikel in ebenfalls an sich bekannter Weise zu Gruppen in der ersten Ebene angeordnet sind und gruppenweise umgesetzt werden, so macht sich die Erfindung besonders vorteilhaft bemerkbar. Wie nämlich bereits angedeutet wurde, muß insbesondere bei sehr großen Gruppen von Kunststoffartikeln mit einer entsprechenden Vielzahl von Formhohlräumen im Werkzeug auch eine entsprechend große Umsetzplatte vorgesehen werden. Wenn diese in herkömmlicher Weise verschwenkt wird, muß der Arm des Handlingsystems weit weggefahren werden, damit Kollisionen mit der umklappenden Umsetzplatte vermieden werden.

Diese Maßnahme hat den Vorteil, daß die Umsetzplatte bezüglich der ersten Ebene fort und nach unten wegtaucht, so daß sie durch diesen Bewegungsablauf einerseits von der ersten in die zweite Ebene gelangt, also vorzugsweise von ihrer vertikalen in eine horizontale Stellung, gleichzeitig aber der Bewegungsbereich des Armes nicht oder nur geringfügig geschnitten wird.

Bei den vorstehend geschilderten beiden Ausführungsbeispielen ist weiter bevorzugt, wenn die Umsetzplatte einen dem ersten Rand gegenüberliegenden zweiten Rand aufweist, der beim Übergang zwischen der ersten und der zweiten Betriebsstellung im wesentlichen entlang der ersten Ebene geführt wird.

Diese Maßnahme hat den Vorteil, daß ein Eindringen der Umsetzplatte in den Bereich der ersten Ebene, d.h. in die Bewegungsbahn des Armes, sicher vermieden oder auf ein akzeptables Maß reduziert werden kann. Da gemäß diesem Ausführungsbeispiel zwei gegenüberliegende Ränder der Umsetzplatte mechanisch geführt werden, wird auch der bereits erwähnte Vorteil in noch größerem Maße erreicht, nämlich daß die Platte sicher geführt ist und daß ein Verkanten nicht befürchtet zu werden braucht.

Bei einer Weiterbildung dieses Ausführungsbeispiels wird dieser Bewegungsablauf in vorteilhafter Weise dadurch erreicht, daß die Umsetzplatte im Bereich des ersten Randes mit einem Gleitlager versehen ist, das entlang einer parallel zur zweiten Ebene verlaufenden Gleitschiene verfahrbar ist.

Diese Maßnahme hat den Vorteil, daß der vorstehend erwähnte Bewegungsablauf sichergestellt ist und die Umsetzplatte bei dieser Bewegung am unteren Rand sicher geführt werden kann. Ein Verkanten der Platte ist damit während dieses Bewegungsablaufes ausgeschlossen.

Bei einer zusätzlichen oder alternativen Ausführungsform der vorstehend genannten Variante ist die Umsetzplatte nur oder auch im Bereich des zweiten Randes mit einem Gleitlager versehen, das entlang einer parallel zur ersten Ebene verlaufenden Gleitschiene verfahrbar ist.

Bei einer ersten Alternative dazu ist die Umsetzplatte hingegen im Bereich des ersten Randes mit einem Gelenk versehen, das entlang einer im wesentlichen tangential zur zweiten Ebene verlaufenden Kreisbahn mit großem Radius verfahrbar ist.

Entsprechend kann in umgekehrter Weise bei einer zweiten Alternative dazu die Umsetzplatte im Bereich des zweiten Randes mit einem Gelenk versehen sein, das entlang einer im wesentlichen tangential zur ersten Ebene verlaufenden Kreisbahn mit großem Radius verfahrbar ist.

In all diesen Fällen ergibt sich eine sichere Führung der Ränder im Bereich der ersten bzw. der zweiten Ebene. Eine exakte Längsführung ist dabei in der ersten und/oder in der zweiten Ebene mittels der Gleitschienen erreichbar. Im anderen Fall wird diese Längsführung durch einen Kreisbogen mit großem Radius angenähert. Diese Alternative kann je nach Einzelfall mechanisch einfacher aufgebaut werden.

Bei Ausführungsbeispielen der Erfindung ist die Umsetzplatte zwischen der ersten und der zweiten Betriebsstellung mittels einer Schwinge bewegbar, die einen zumindest während eines Teiles des Bewegungsablaufes außerhalb der Umsetzplatte liegenden Gelenkpunkt aufweist, wobei eine servomechanische Verstelleinheit an dem Gelenkpunkt angreift.

Diese Maßnahme hat den Vorteil, daß mittels eines einzigen Verstellelementes der gesamte Bewegungsablauf bewirkt werden kann, ohne daß mehrere Antriebe erforderlich sind.

Besonders bevorzugt ist in diesem Falle, wenn die Verstelleinheit im Bereich der zweiten Ebene, weiter vorzugsweise unterhalb der zweiten Ebene, angeordnet ist.

Diese Maßnahmen haben mehrere wesentliche Vorteile. Zum einen führt ein untenliegender Antrieb zu einer niedrigeren Bauhöhe des Handlingsystems. Weiterhin ist besonders bei Reinraumanwendungen bevorzugt, wenn sich die Antriebselemente im unteren Bereich der Anlage befinden. Bei Reinräumen wird nämlich stets eine Luftführung eingestellt, bei der ein sogenannter Laminarflow von oben nach unten strömt, um eventuelle Störpartikel nach unten abzuführen. Wenn sich in einer derartigen Situation Antriebselemente oberhalb einer Förderbahn befinden, so kann es geschehen, daß störende Partikel, die durch Abrieb im Antrieb erzeugt werden, durch den Laminarflow nach unten mitgenommen werden und sich auf den geförderten Teilen absetzen. Dies wird vermieden, wenn sich die Antriebselemente unterhalb der Förderbahn oder zumindest in gleicher Höhe wie die Förderbahn befinden. Darüber hinaus ergibt sich bei einem untenliegenden Antrieb auch eine stabilere Bauweise der Anordnung und eine bessere Zugänglichkeit zu den Antriebselementen.

Die vorstehenden Vorteile gelten natürlich auch und gerade für den Fall, daß auch die Antriebselemente des Armes des Handlingsystems sich unterhalb der Förderbahn befinden.

Es sei an dieser Stelle ferner angemerkt, daß die vorstehenden Überlegungen selbstverständlich auch für den Fall gelten, daß in umgekehrter Weise, wie soeben geschildert, Teile von einem Förderband abgenommen und mittels des Handlingsystems in die noch leeren Hohlräume des Werkzeugs eingelegt werden. Eine solche Situation liegt z.B. dann vor, wenn die Kunststoffartikel mit bestimmten Einlegeteilen versehen werden sollen, beispielsweise mit Verstärkungselementen, mit Stiften, Scharnieren und dergleichen oder im Falle der Herstellung von sogenannten "Smart Cards" mit elektronischen Schaltkreisen, Antennen und ähnlichen Elementen. In diesem Falle ist der Bewegungsablauf gerade umgekehrt wie soeben beschrieben, die dargestellten Vorteile stellen sich jedoch ebenso ein.

Die Verstelleinheit ist vorzugsweise als Kolben-Zylinder-Einheit ausgebildet, es versteht sich jedoch, daß auch andere Verstelleinheiten, z.B. motorische Verstelleinheiten, eingesetzt werden können.

Hinsichtlich der Angriffspunkte der Verstelleinheit sind erfindungsgemäß zwei Alternativen vorgesehen.

Bei einer ersten Alternative ist die Verstelleinheit an einem raumfesten Gelenkpunkt angeordnet.

Diese Maßnahme hat den Vorteil, daß ein einfacher Aufbau entsteht. Allerdings muß die Verstelleinheit dabei einen relativ großen Verstellhub ausführen, so daß es unter Umständen erforderlich ist, bei Einsatz einer Kolben-Zylinder-Einheit einen Teleskopzylinder zu verwenden.

Bei einer Alternative dazu, bei der die Umsetzplatte in der bereits erwähnten Weise an mindestens einem Rand mittels eines Gleitlagers in einer sich parallel zu einer der Ebenen erstrekkenden Gleitschiene geführt ist, wird die Gleitschiene parallel zu dieser Ebene verschiebbar gelagert, wobei die Verstelleinheit an der verschiebbaren Gleitschiene angelenkt ist.

Diese Maßnahme hat den Vorteil, daß beim Aus- und Einfahren der Verstelleinheit sich zugleich die längs verschiebbare Gleitschiene ebenfalls verschiebt, so daß ein komplexer Bewegungsablauf entsteht, der jedoch den Vorteil hat, insgesamt nur einen geringen Bewegungsraum einzunehmen. Damit braucht für das Handlingsystem nur ein geringerer Einbauraum freigehalten zu werden, und die Verstelleinheit selbst braucht nur einen relativ geringen Hub auszuführen. Wird eine Kolben-Zylinder-Einheit verwendet, so ist es ausreichend, nur einen einfachen Kolben (und keine Teleskopeinheit) einzusetzen.

Weitere Vorteile ergeben sich aus der Beschreibung und der beigefügten Zeichung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1A-1D: ein Handlingsystem nach dem Stand der Technik in vier verschiedenen Betriebsstellungen;
- Fig. 2A-2C: ein erstes Ausführungsbeispiel eines erfindungsgemäßen Handlingsystems in drei verschiedenen Betriebsstellungen;
- Fig. 3: ein zweites Ausführungsbeispiel eines erfindungsgemäßen Handlingsystems in einer Betriebsstellung ähnlich Fig. 2B;
- Fig. 4A-4C: ein drittes Ausführungsbeispiel eines erfindungsgemäßen Handlingsystems in drei verschiedenen Betriebsstellungen; und
- Fig. 5: ein viertes Ausführungsbeispiel eines erfindungsgemäßen Handlingsystems ähnlich dem gemäß Fig. 4A.

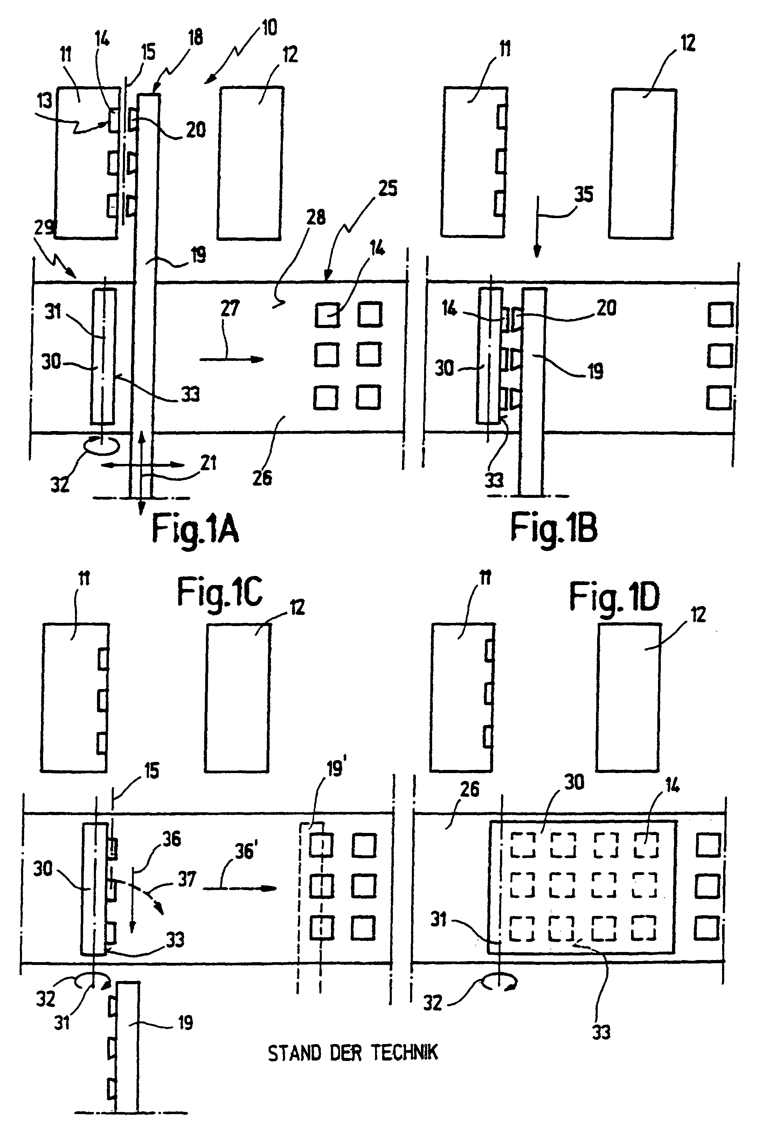

In der Draufsicht gemäß Fig. 1 bezeichnet 10 insgesamt eine Kunststoff-Spritzgießmaschine nach dem Stand der Technik.

Die Maschine 10 umfaßt eine erste Werkzeughälfte 11 und eine zweite Werkzeughälfte 12. Die erste Werkzeughälfte 11 ist mit Formhohlräumen 13 versehen. In der Ausgangssituation gemäß Fig. 1A befinden sich fertig gespritzte Kunststoffartikel 14 in den Formhohlräumen 13.

Wie bereits erwähnt wurde, ist Fig. 1 eine Draufsicht. Es sind also nur die Formhohlräume 13 einer Reihe zu sehen. Die Formhohlräume 13 definieren jedoch eine erste Ebene 15, so daß sich mehrere Reihen von Formhohlräumen 13 übereinander befinden, die Formhohlräume 13 also ein Raster von beispielsweise 3 x 4 = 12 Formhohlräumen bilden. Dies ist natürlich nur als Beispiel zu verstehen.

Es sei ferner darauf hingewiesen, daß die in Fig. 1 schematisch angedeutete Kunststoff-Spritzgießmaschine 10 mit einem zweiteiligen Werkzeug 11, 12 ebenfalls nur beispielhaft zu verstehen ist. Die Erfindung ist selbstverständlich auch bei anderen Bauformen derartiger Maschinen einsetzbar, die z.B. mit einem Etagenwerkzeug oder anderen Werkzeugarten arbeiten.

Mit dem Bezugszeichen 18 ist ein Handlingsystem bezeichnet. Das Handlingsystem 18 umfaßt einen Greifarm 19, der an seinem freien Ende mit Greifern 20, z.B. mit Saugnäpfen, versehen ist. Der Greifarm 19 ist mittels geeigneter Antriebe in mehreren Richtungen verfahrbar, wie in Fig. 1A mit einem Koordinatensystem 21 angedeutet.

Seitlich neben der Kunststoff-Spritzgießmaschine 10 befindet sich eine insgesamt mit 25 bezeichnete Fördereinrichtung. Die Fördereinrichtung 25 umfaßt ein Förderband 26, das in Richtung eines Pfeils 27 verfahrbar ist. Das Förderband 26 definiert damit eine zweite Ebene 28.

Im dargestellten Beispielsfall liegt die erste Ebene 15 der Formhohlräume 13 vertikal, während die zweite Ebene 28 des Förderbandes 26 horizontal verläuft. Es ist somit erforderlich, die Kunststoffartikel 14 nach der Entnahme aus den Formhohlräumen 13 aus der vertikalen ersten Ebene 15 in die horizontale zweite Ebene 28 umzusetzen.

Zu diesem Zweck ist eine mit dem Bezugszeichen 29 angedeutete Umsetzstation vorgesehen. Im dargestellten Beispielsfall umfaßt die Umsetzstation 29 eine Umsetzplatte 30, die ebenfalls im wesentlichen in der ersten Ebene 15 angeordnet ist. Die Umsetzplatte 30 ist an ihrer Unterseite um eine horizontale Achse 31, die eine Schwenkachse bildet, verschwenkbar, wie noch erläutert werden wird. Dies ist mit einem Pfeil 32 angedeutet.

Die Umsetzplatte 30 weist eine vordere Oberfläche 33 auf, die in der ersten Ebene 15 liegt.

In der Ausgangsstellung gemäß Fig. 1A befindet sich der Arm 19 in seiner ausgefahrenen Position, in der seine Greifer 20 den Formhohlräumen 13 gegenüberstehen und damit die Kunststoffartikel 14 entnehmen können.

Wie mit einem Pfeil 35 in Fig. 1B dargestellt, wird der Arm 19 nun zurückgezogen, bis die Greifer 20 der Oberfläche 33 der Umsetzplatte 30 gegenüberstehen. Die Kunststoffartikel 14 werden nun auf die Oberfläche 33 übergeben.

Bei diesem bekannten Handlingsystem 18 muß nun der Arm 19 gemäß Fig. 1C anschließend in Richtung eines Pfeils 36 nach unten verfahren werden, bis er sich in der Draufsicht gemäß Fig. 1C unterhalb der Umsetzplatte 30 befindet. Alternativ kann der Arm 19 auch nach rechts verfahren werden, wie in Fig. 1C gestrichelt und mit einem Pfeil 36' angedeutet ist. Der Arm 19' bewegt sich in diesem Falle entlang der Richtung (Pfeil 27) des Förderbandes 26.

Diese Bewegung des Armes 19 bzw. 19' ist deswegen notwendig, weil die Umsetzplatte 30 nun um ihre Schwenkachse 31 nach rechts umgekippt wird, wie mit einer Bewegungsbahn 37 angedeutet. Die zuvor vertikal hochstehende Umsetzplatte 30 liegt nun mit der Oberfläche 33 nach unten auf dem Förderband 26 auf, wie deutlich aus Fig. 1D zu erkennen ist. Man erkennt in Fig. 1D auch deutlich das Raster der Kunststoffartikel 14, das dem Raster der Formhohlräume 13 in der ersten Werkzeughälfte 11 entspricht.

In der Betriebsstellung gemäß Fig. 1D werden nun die Kunststoffartikel 14 von der Umsetzplatte 30 auf das Förderband 26 übergeben, indem z.B. vorhandene Halteelemente an der Umsetzplatte 30 gelöst werden und die Kunststoffartikel 14 durch Schwerkraft auf das Förderband 26 fallen bzw. auf diesem liegen bleiben, wenn die Umsetzplatte 30 wieder um die Schwenkachse 31 nach oben zurückgeschwenkt wird.

Es ist leicht einzusehen, daß das Verfahren des Armes 19 bzw. 19' aus der Betriebsstellung gemäß Fig. 1B in die Betriebsstellung gemäß Fig. 1C und später wieder zurück einige Zeit erfordert, die den Umsetzvorgang und damit die Zykluszeit der Kunststoff-Spritzgießmaschine 10 verlängert.

Hier schafft die vorliegende Erfindung Abhilfe.

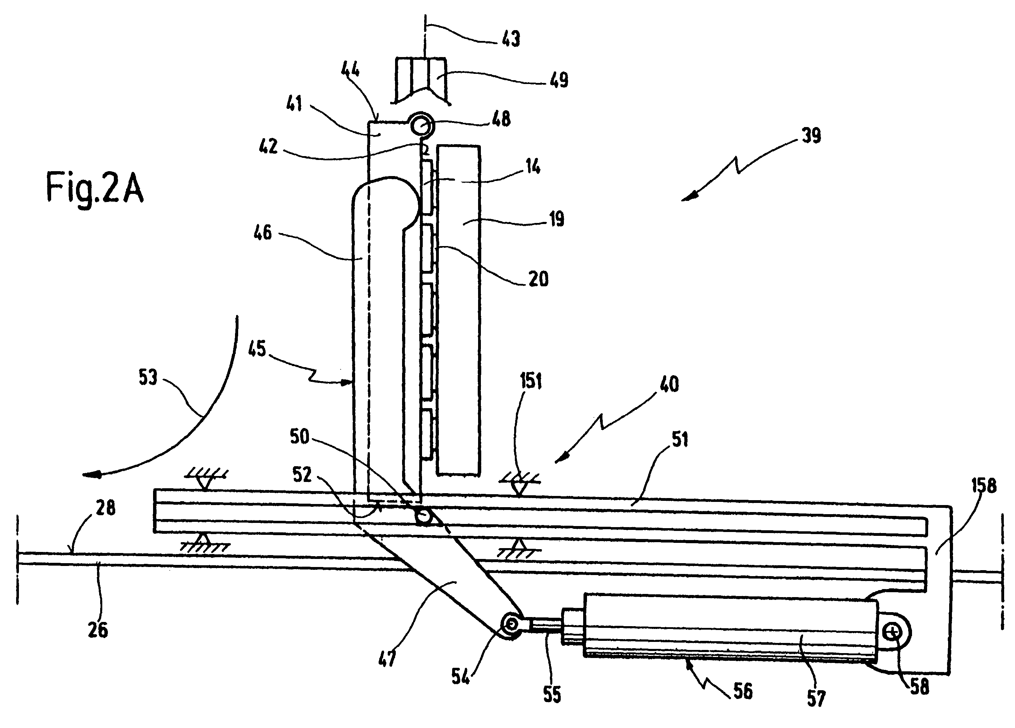

In den Figuren 2A bis 2C ist in drei Bewegungsphasen ein erstes Ausführungsbeispiel eines erfindungsgemäßen Handlingsystems 39 dargestellt. Die Figuren 2A bis 2C sind dabei Seitenansichten.

Man erkennt eine mit dem Bezugszeichen 40 bezeichnete Umsetzstation, die wiederum eine Umsetzplatte 41 aufweist. In der Ausgangsstellung gemäß Fig. 2A steht die Umsetzplatte 41 vertikal nach oben. Sie weist an ihrer Vorderseite eine Oberfläche 42 für die Kunststoffartikel 14 auf. Auf diese Weise wird eine erste Ebene 43 definiert, die wiederum mit der Ebene der Formhohlräume (nicht dargestellt) und der Verfahrrichtung des Armes 19 (vgl. Fig. 1A und Fig. 1B) zusammenfällt.

Ein erster, oberer Rand der Umsetzplatte 41 ist mit 44 bezeichnet.

An der Umsetzplatte 41 greift eine Schwinge 45 an. Die Schwinge 45 umfaßt einen Abschnitt 46, der die Umsetzplatte 41 seitlich ergreift und mit dieser fest verbunden ist. Ein freier Arm 47 der Schwinge 45 steht von der Umsetzplatte 41 in der Position gemäß Fig. 2A nach rechts und unten ab.

An der in Fig. 2A oberen rechten Ecke der Umsetzplatte 41, d.h. oberhalb des oberen Endes des Abschnitts 46 der Schwinge 45, bzw. am rechten Ende des ersten Randes 44, befindet sich ein erstes Gleitlager 48. Das erste Gleitlager 48 läuft in einer nur schematisch angedeuteten ersten Gleitschiene 49, die vertikal verläuft, also parallel zur ersten Ebene 43, vorzugsweise in deren unmittelbarer Nähe oder mit dieser zusammenfallend.

Am unteren Ende des Abschnitts 46 der Schwinge 45 befindet sich ein zweites Gleitlager 50, das in einer ebenfalls nur angedeuteten zweiten Gleitschiene 51 läuft. Die zweite Gleitschiene 51 erstreckt sich in horizontaler Richtung, und zwar in unmittelbarer Nähe eines zweiten, unteren Randes 52 der Umsetzplatte 41. Die zweite Gleitschiene 51 ist ihrerseits in horizontaler Richtung, d.h. parallel zu der vom Förderband 26 definierten zweiten Ebene 28, in raumfesten Lagern 151 verschiebbar.

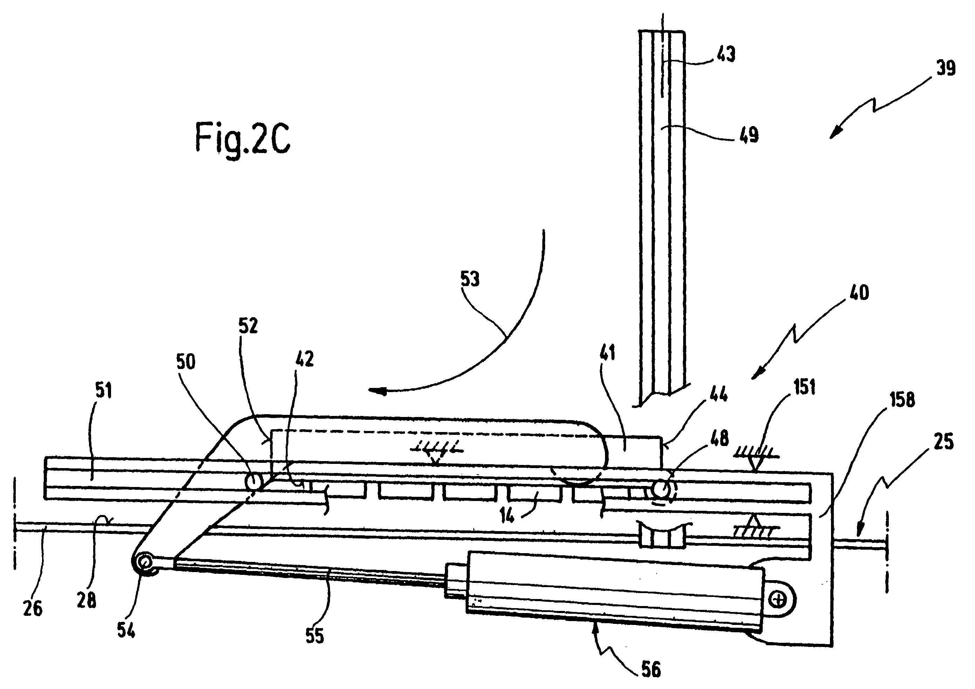

Um die Umsetzplatte 41 aus ihrer in Fig. 2A dargestellten ersten, vertikalen Betriebsstellung in eine in Fig. 2C dargestellte zweite, horizontale Betriebsstellung zu überführen, ist ein Bewegungsablauf vorgesehen, der mit einer Bewegungsbahn 53 angedeutet ist.

Zum Ausführen der Bewegungsbahn 53 ist an einem ersten Gelenkpunkt 54 am freien Ende des freien Armes 47 der Schwinge 45 eine Kolbenstange 55 einer Kolben-Zylinder-Einheit 56 angelenkt. Deren Zylinder 57 ist an einem zweiten Gelenkpunkt 58 festgelegt.

Der zweite Gelenkpunkt 58 ist über einen Flansch 158 mit der zweiten Gleitschiene 51 starr verbunden und daher zusammen mit dieser in horizontaler Richtung verfahrbar.

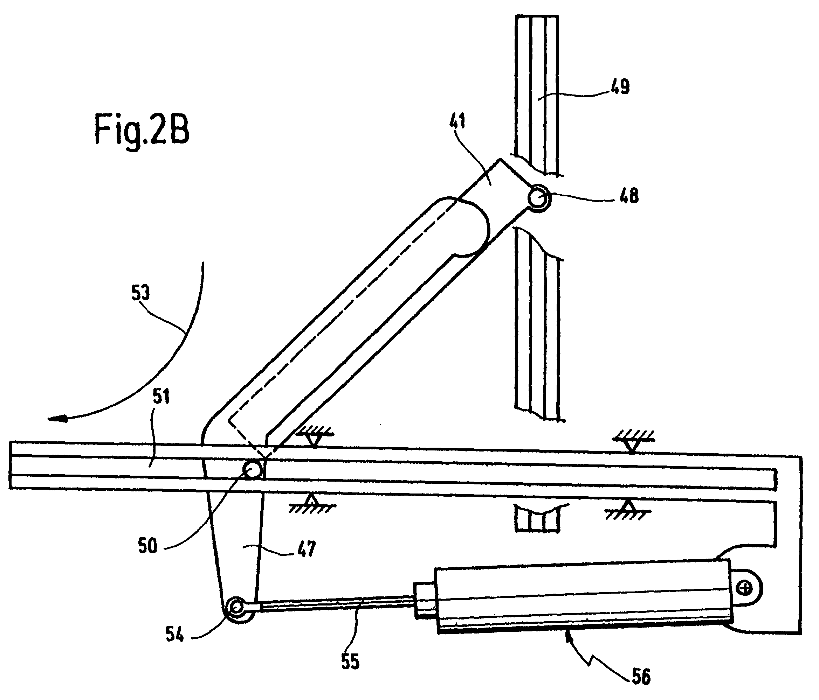

Wie man nun leicht aus den nachfolgenden Bewegungsdarstellungen gemäß den Figuren 2A, 2B und 2C erkennen kann, bewirkt ein Ausfahren des Kolbens bzw. dessen zugehöriger Kolbenstange 55, daß das zweite Gleitlager 50 sich entlang der zweiten Gleitschiene 51 nach links und gleichzeitig das erste Gleitlager 48 entlang der ersten Gleitschiene 49 nach unten bewegt. Wegen der starren Verbindung der zweiten Gleitschiene 51 mit dem zweiten Gelenkpunkt 58 über den Flansch 158 verfahren gleichzeitig die zweite Gleitschiene 51 und die Kolben-Zylinder-Einheit 56 ebenfalls nach links. Aufgrund des komplexen Bewegungsablaufes ist dabei der gesamte benötigte Bewegungsraum relativ klein, und die Ausfahrbewegung der Kolbenstange 55 ist ebenfalls auf einen verhältnismäßig geringen Wert begrenzt, so daß eine Kolben-Zylinder-Einheit mit nur einer Kolbenstange 55 Verwendung finden kann.

Da das erste Gleitlager 48 an der rechten oberen Ecke der Umsetzplatte 41 angeordnet ist, dringt der erste Rand 44 nicht in den Bereich der ersten Ebene 43 ein.

In der zweiten Betriebsstellung gemäß Fig. 2C weist die Oberfläche 42 der Umsetzplatte 41 nach unten, so daß die Kunststoffartikel 14 dort problemlos auf das Förderband 26 übergeben werden können.

Während des Bewegungsablaufes gemäß Fig. 2A bis Fig. 2C bleibt der Bereich rechts von der ersten Ebene 43, wie erwähnt, unberührt, so daß der dort befindliche Arm 19 (Fig. 2A) in seiner Stellung stehen bleiben oder allenfalls ganz geringfügig nach rechts verfahren werden muß. Auf diese Weise geht keine Zeit verloren.

Es ist ferner aus den Figuren 2A bis 2C zu erkennen, daß sich die Antriebselemente für die Umsetzstation 40, nämlich die Kolben-Zylinder-Einheit 56, unterhalb des Förderbandes 26 befinden, so daß der Raum oberhalb des Förderbandes 26 von diesen Einbauten frei ist.

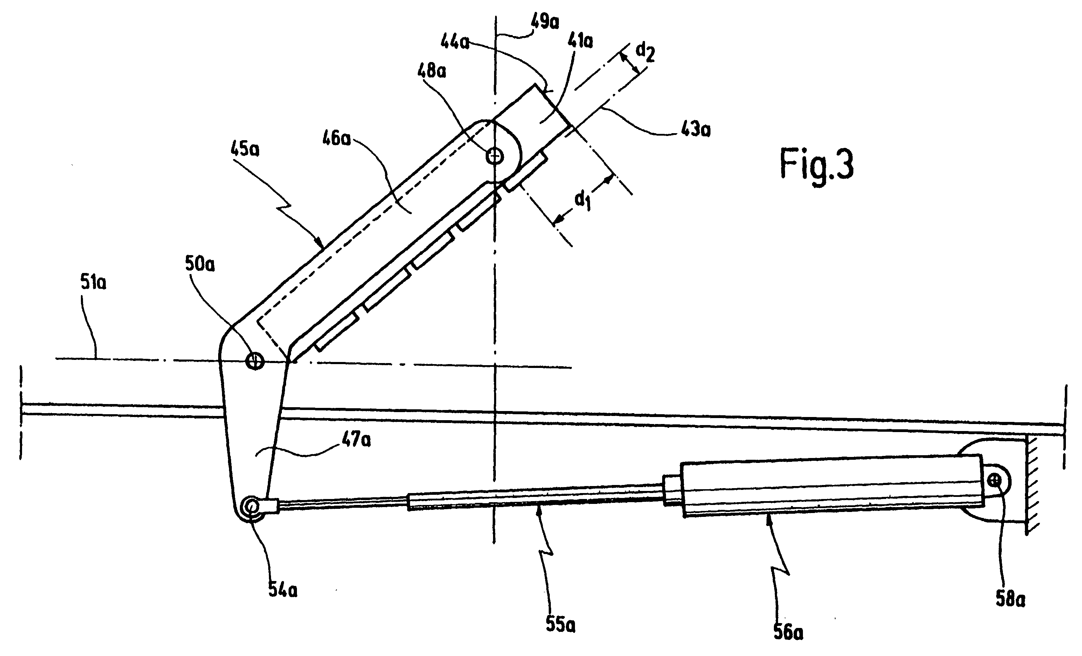

Fig. 3 zeigt eine Variante des in den Figuren 2A bis 2C dargestellten Ausführungsbeispiels, wobei die Darstellung gemäß Fig. 3 sinngemäß der Darstellung gemäß Fig. 2B entspricht. Gleiche Elemente sind mit gleichen Bezugszeichen versehen, und in Fig. 3 ist zur Unterscheidung lediglich jeweils ein "a" hinzugefügt worden.

Das Ausführungsbeispiel gemäß Fig. 3 unterscheidet sich von dem gemäß Fig. 2B im wesentlichen in zweierlei Hinsicht:

Zunächst ist beim Ausführungsbeispiel gemäß Fig. 3 eine Anordnung gewählt, bei der das erste Gleitlager 48a sich nicht in der rechten oberen Ecke der Umsetzplatte 41a befindet sondern vielmehr am oberen Ende des Abschnittes 46a der Schwinge 45a. Das erste Gleitlager 48a hat damit einen Abstand d₁ vom oberen ersten Rand 44a. Außerdem ist das erste Gleitlager 48a um einen Abstand d₂ von der ersten Ebene 43a zurückgesetzt.

Diese konstruktive Ausbildung ist in einigen Anwendungsfällen etwas einfacher auszuführen, hat jedoch gegenüber dem zuvor geschilderten Ausführungsbeispiel gemäß Fig. 2A bis 2C den Nachteil, daß der erste Rand 44a etwas in den Bereich jenseits der ersten Ebene 43a in der Ausgangsstellung (das ist in etwa die Position der ersten Gleitschiene 49a in Fig. 3) hinein reicht.

Der zweite Unterschied besteht darin, daß beim Ausführungsbeispiel gemäß Fig. 3 die Kolben-Zylinder-Einheit 56a an ihrem in Fig. 3 rechten Ende im zweiten Gelenkpunkt 58a raumfest angeschlagen ist. Die zweite Gleitschiene 51a, die in Fig. 3 nur durch eine strichpunktierte Linie angedeutet ist, kann damit in sich ebenfalls raumfest sein, so daß die raumfesten Lager 151 des Ausführungsbeispiels gemäß Fig. 2A bis 2C in diesem Falle nicht benötigt werden.

Allerdings ist beim Ausführungsbeispiel gemäß Fig. 3 der gesamte benötigte Bewegungsraum größer, weil das rechte Ende der Kolben-Zylinder-Einheit 56a am raumfesten zweiten Gelenkpunkt 58a fixiert bleibt und nicht zusammen mit einer beweglichen Gleitschiene nach links verfahren wird, wenn die Umsetzplatte 41 den Bewegungsablauf durchfährt.

Da in diesem Fall der erste Gelenkpunkt 54a im Vergleich zum Ausführungsbeispiel gemäß Fig. 2A bis 2C ebenfalls einen wesentlich längeren Weg durchmessen muß (relativ zum raumfesten zweiten Gelenkpunkt 58a), ist es beim Ausführungsbeispiel gemäß Fig. 3 erforderlich, die Kolben-Zylinder-Einheit 56a mit einer teleskopierten Kolbenstange 55a auszustatten.

Der Vorteil in der konstruktiven Ausgestaltung der zweiten Gleitschiene 51a wird daher beim Ausführungsbeispiel gemäß Fig. 3 durch einen gewissen konstruktiven Mehraufwand im Bereich der Kolben-Zylinder-Einheit 56a sowie einen etwas größeren Bewegungsraum erkauft.

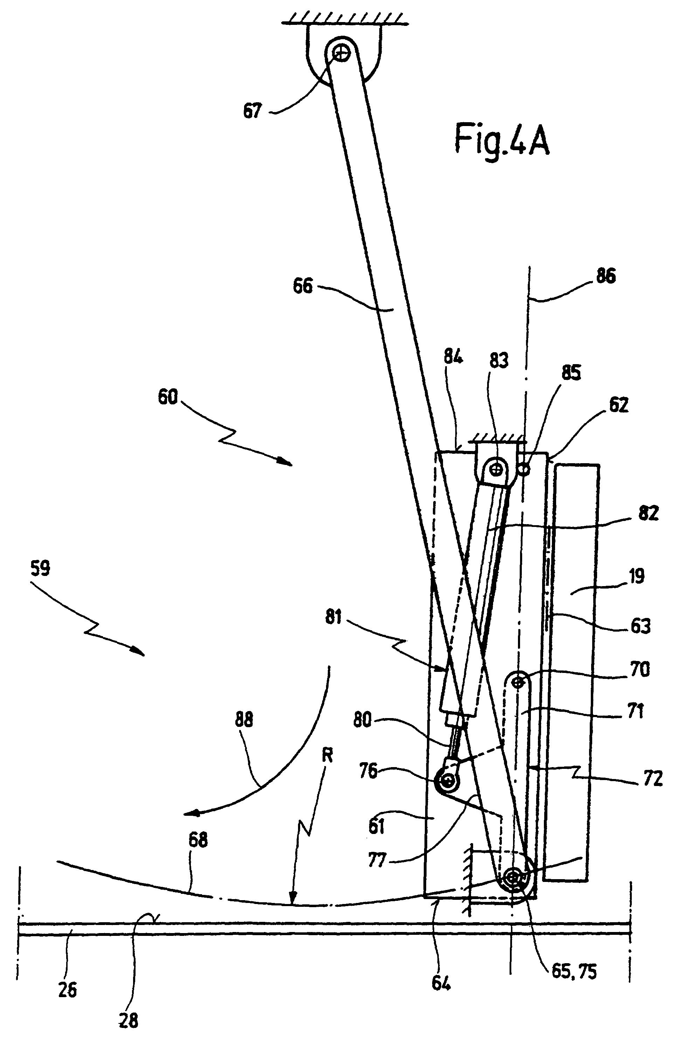

Die Figuren 4A bis 4C zeigen ein zweites Ausführungsbeispiel eines erfindungsgemäßen Handlingsystems 59 mit einer Umsetzstation 60. Die Ansicht ist dabei dieselbe wie in den Figuren 2A bis 2C.

Die Umsetzstation 60 umfaßt wiederum eine Umsetzplatte 61 mit einer Oberfläche 62 zur Aufnahme der Kunststoffartikel (nicht dargestellt). Die Oberfläche 62 definiert wiederum eine erste Ebene 63.

Die Umsetzplatte 61 weist einen ersten, in Fig. 4A unteren Rand 64 auf, in dessen Nähe sich ein erster Gelenkpunkt 65 der Umsetzplatte 61 befindet. Eine erste Schwinge 66 führt vom ersten Gelenkpunkt 65 zu einem zweiten, raumfesten Gelenkpunkt 67. Die erste Schwinge 66 hat eine gegenüber den Abmessungen der Umsetzplatte 61 große Länge, so daß der erste Gelenkpunkt 65 beim Verschwenken der ersten Schwinge 66 eine Kreisbahn 68 mit sehr großem Radius R beschreibt.

Ein dritter Gelenkpunkt 70 ist etwa in der Mitte der Umsetzplatte 61 angebracht. An den dritten Gelenkpunkt 70 greift ein erster Arm 71 einer zweiten, zweiarmigen Schwinge 72 an. Die zweite Schwinge 72 ist an einem vierten, raumfesten Gelenkpunkt 75 angelenkt. An einem fünften Gelenkpunkt 76 am freien Ende eines zweiten Armes 77 der zweiten Schwinge 72 greift ein Kolben 80 bzw. eine Kolbenstange einer Kolben-Zylinder-Einheit 81 an. Deren Zylinder 81 ist an einem sechsten, raumfesten Gelenkpunkt 83 schwenkbar gelagert.

Ein zweiter, in Fig. 4A oberer Rand der Umsetzplatte 61 ist mit 84 bezeichnet. In der Nähe des zweiten Randes 84 befindet sich ein Gleitlager 85 an der Umsetzplatte 61. Es versteht sich auch hier, daß sich das Gleitlager 85 vorzugsweise so weit wie möglich in der in Fig. 4A rechten oberen Ecke der Umsetzplatte 41 befinden sollte (vgl. das erste Gleitlager 48 in Fig. 2A). Das Gleitlager 85 ist entlang einer nur angedeuteten Gleitschiene 86 verfahrbar. Die Gleitschiene 86 verläuft vertikal und damit senkrecht zur vom Förderband 26 definierten zweiten Ebene 28.

In der Betriebsstellung gemäß Fig. 4A fallen in der Seitenansicht der erste Gelenkpunkt 65 und der vierte, raumfeste Gelenkpunkt 75 zusammen.

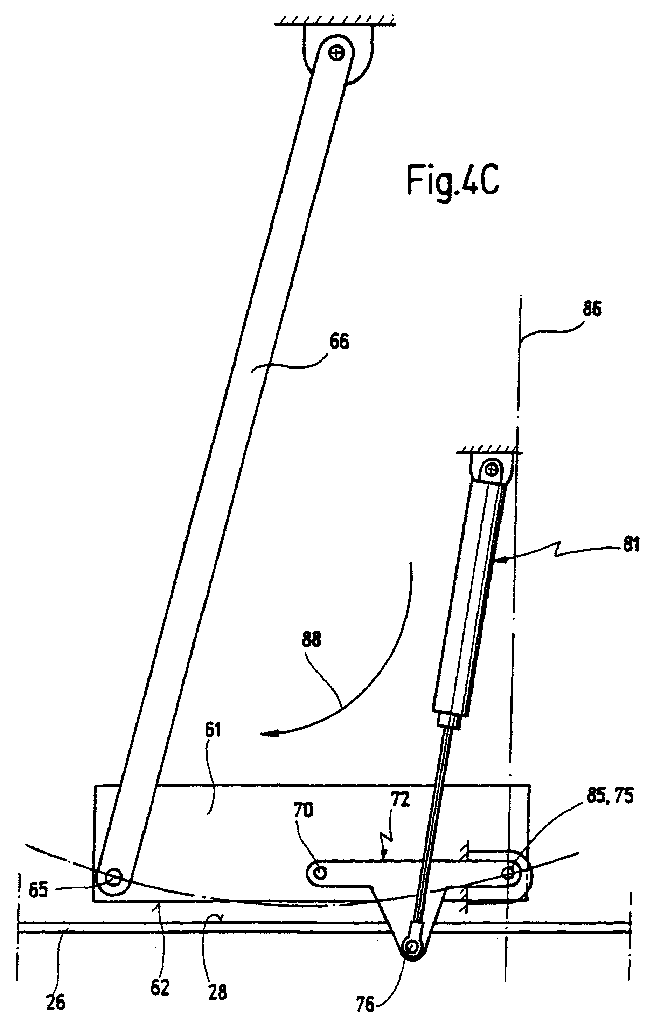

Fig. 4A zeigt die erste, vertikale Betriebsstellung der Umsetzplatte 61, während Fig. 4C die zweite, horizontale Betriebsstellung zeigt. Entlang einer mit 88 bezeichneten Bewegungsbahn soll nun die Umsetzplatte verfahren werden, wobei der zweite Rand 84 die erste Ebene 63 nicht oder nur unwesentlich schneiden soll.

Dies wird bei dem dargestellten Bewegungsablauf erreicht, weil der in der Darstellung von Fig. 4A in der rechten unteren Ecke der Umsetzplatte 61 befindliche erste Gelenkpunkt 65 entlang der Kreisbahn 68 mit großem Radius R geführt wird, die links von der ersten Ebene 63 verläuft.

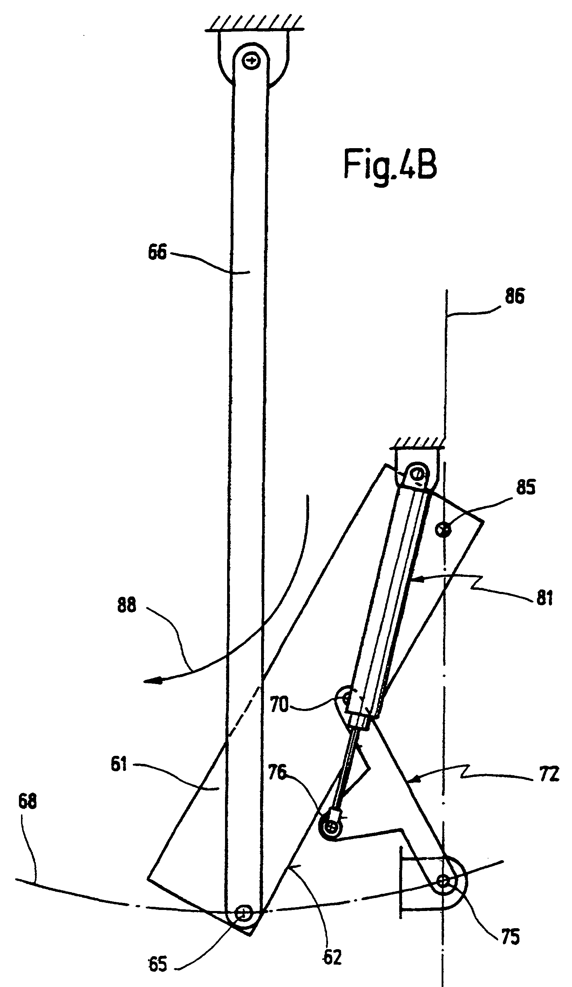

Wenn die Kolbenstange 80 der Kolben-Zylinder-Einheit 81 aus der Stellung gemäß Fig. 4A ausgefahren wird, wird die zweite Schwinge 72 im Gegenuhrzeigersinn um den vierten, raumfesten Gelenkpunkt 75 verschwenkt, so daß auch der dritte Gelenkpunkt 70 in der Mitte der Umsetzplatte 61 einen Viertelkreis im Gegenuhrzeigersinn nach links vollführt. Dadurch wird das Gleitlager 85 entlang der Gleitschiene 86 von oben nach unten verschoben und gleichzeitig die rechte untere Ecke der Umsetzplatte 61 aus der ersten Betriebsstellung gemäß Fig. 4A entlang der Kreisbahn 68 nach links verschwenkt. Über die Zwischenstellung gemäß Fig. 4B gelangt die Umsetzplatte 61 daher in ihre Endstellung gemäß Fig. 4C. Dort weist die Oberfläche 62, wie gewünscht, nach unten, so daß die darauf befindlichen Kunststoffartikel nach unten auf das darunter befindliche Förderband übergeben werden können (nicht dargestellt).

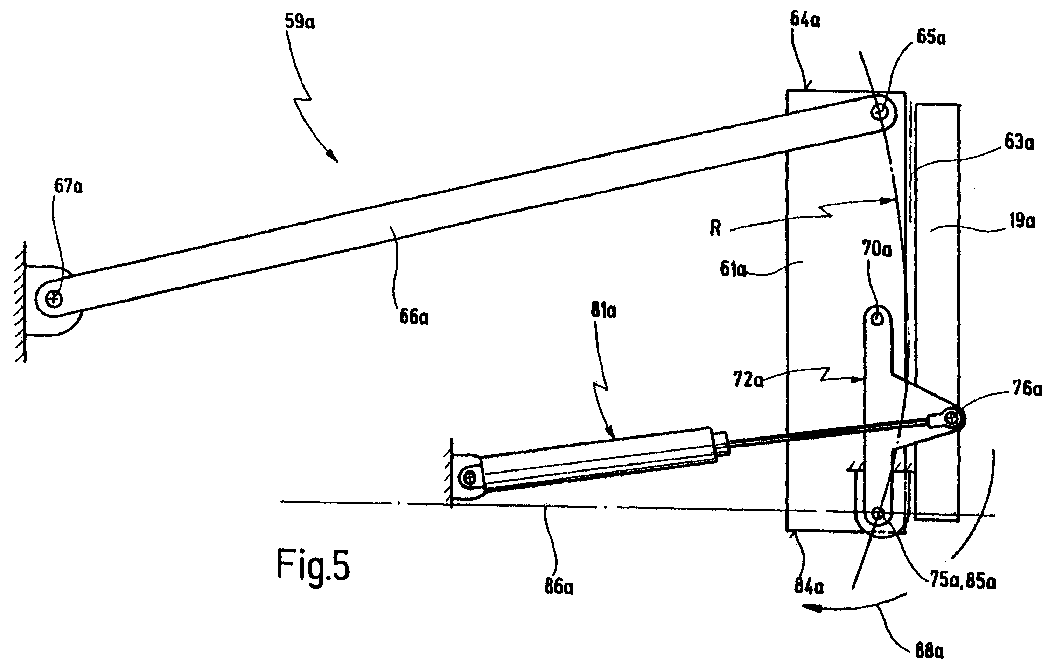

Fig. 5 zeigt eine Variante zum Ausführungsbeispiel gemäß Fig. 4A bis 4C. Konstruktiv entspricht das Ausführungsbeispiel gemäß Fig. 5 praktisch identisch dem Ausführungsbeispiel gemäß Fig. 4A bis 4C, es ist lediglich die Orientierung um 90° gedreht, so daß die in Fig. 4C gezeigte Endstellung des Ausführungsbeispiels gemäß Fig. 4A bis 4C der Ausgangsstellung des Ausführungsbeispiels gemäß Fig. 5 (um 90° gedreht) entspricht. Der Bewegungsablauf vollzieht sich dann in umgekehrter Reihenfolge. Folglich sind in Fig. 5 alle Elemente mit denselben Bezugszeichen wie in den Fig. 4A bis 4C versehen, und es wurde lediglich zur Unterscheidung ein "a" hinzugefügt.

Im übrigen ist der Bewegungsablauf des Ausführungsbeispiels gemäß Fig. 5 aus sich selbst heraus erklärlich, da die vorstehende Beschreibung für das Ausführungsbeispiel gemäß den Fig. 4A bis 4C herangezogen werden kann und lediglich die Begriffe "Uhrzeigersinn" in "Gegenuhrzeigersinn" usw. verändert werden müssen.

Entsprechendes gilt übrigens auch für das Ausführungsbeispiel gemäß den Fig. 2A bis 2C und das Ausführungsbeispiel gemäß Fig. 3, weil auch diese selbstverständlich in "umgekehrter" Anordnung eingesetzt werden können, indem die Gesamtanordnung um 90° gedreht wird, wobei dann die jeweils gezeigte Endstellung der Ausgangsstellung dieses veränderten Ausführungsbeispiels entsprechen würde.

## Patentansprüche

1. Handlingsystem für eine Kunststoff-Spritzgießmaschine (10), mit einem Arm (19) zum Entnehmen von Kunststoffartikeln (14) aus Formhohlräumen (13) eines Werkzeugs (11) der Kunststoff-Spritzgießmaschine, wobei die Formhohlräume (13) in einer ersten Ebene (15; 43; 63) angeordnet sind, und der Arm (19) sich in der ersten Ebene (15; 43; 63) bewegt, mit einer sich in einer zweiten Ebene (28) bewegenden Fördereinrichtung (25) zum Abtransportieren der Kunststoffartikel (14), und mit einer zwischen Werkzeug (11) und Fördereinrichtung (25) angeordneten Umsetzstation (29; 40; 60) zum Umsetzen der entnommenen Kunststoffartikel (14) aus der ersten Ebene (15; 43; 63) in die zweite Ebene (28), wobei die Umsetzstation (29; 40; 60) eine Umsetzplatte (30; 41; 61) für die Kunststoffartikel (14) aufweist, die entlang einer vorbestimmten Bewegungsbahn (37; 53; 88) aus einer ersten Betriebsstellung in der ersten Ebene (15; 43; 63) in eine zweite Betriebsstellung in der zweite Ebene (28) bewegbar ist, wobei die Bewegungsbahn (53; 88) außerhalb der ersten Ebene (43; 63) verläuft,
**dadurch gekennzeichnet, daß** die Umsetzplatte (41; 61) mit einem ersten Rand (52; 64; 84a) im Bereich der zweiten Ebene (28) angeordnet und bei der Bewegung aus der ersten in die zweite Betriebsstellung mit dem ersten Rand (52; 64; 84a) parallel zur zweiten Ebene (28) in Richtung von der ersten Ebene (43; 63) fort bewegbar ist.

2. Handlingsystem nach Anspruch 1, **dadurch gekennzeichnet, daß** die erste Ebene (43; 63) vertikal verläuft.

3. Handlingsystem nach Anspruch 1 oder 2, **dadurch gekennzeichnet, daß** die zweite Ebene (28) horizontal verläuft.

4. Handlingsystem nach Anspruch 3, **dadurch gekennzeichnet, daß** die Fördereinrichtung (25) ein Förderband (26) umfaßt.

5. Handlingsystem nach einem oder mehreren der Ansprüche 1 bis 4, **dadurch gekennzeichnet, daß** die Kunststoffartikel (14) zu Gruppen in der ersten Ebene (43; 63) angeordnet sind und der Arm (19) sowie die Umsetzplatte (30; 41; 61) Aufnahmeeinrichtungen für eine Gruppe von Kunststoffartikeln aufweisen.

6. Handlingsystem nach Anspruch 1, **dadurch gekennzeichnet, daß** die Umsetzplatte (41; 61) einen dem ersten Rand (52; 64) gegenüberliegenden zweiten Rand (44; 84) aufweist, und daß der zweite Rand (44; 68) beim Übergang zwischen der ersten und der zweiten Betriebsstellung entlang der ersten Ebene (43; 63) geführt wird.

7. Handlingsystem nach Anspruch 1 oder 6, **dadurch gekennzeichnet, daß** die Umsetzplatte (41; 61a) im Bereich des ersten Randes (52; 64) mit einem Gleitlager (50; 85a) versehen ist, das entlang einer parallel zur zweiten Ebene (28) verlaufenden Gleitschiene (51; 86a) verfahrbar ist.

8. Handlingsystem nach Anspruch 6 oder 7, **dadurch gekennzeichnet, daß** die Umsetzplatte (41; 61) im Bereich des zweiten Randes (44; 84) mit einem Gleitlager (48; 85) versehen ist, das entlang einer parallel zur ersten Ebene (43; 63) verlaufenden Gleitschiene (49; 86) verfahrbar ist.

9. Handlingsystem nach Anspruch 6 oder 7, **dadurch gekennzeichnet, daß** die Umsetzplatte (61) im Bereich des ersten Randes (64) mit einem Gelenk (65) versehen ist, das entlang einer im wesentlichen tangential zur zweiten Ebene (28) verlaufenden Kreisbahn (68) verfahrbar ist.

10. Handlingsystem nach Anspruch 6 oder 7, **dadurch gekennzeichnet, daß** die Umsetzplatte (61a) im Bereich des zweiten Randes (64a) mit einem Gelenk (65a) versehen ist, das entlang einer im wesentlichen tangential zur ersten Ebene (63a) verlaufenden Kreisbahn (68a) verfahrbar ist.

11. Handlingsystem nach einem oder mehreren der Ansprüche 1 bis 10, **dadurch gekennzeichnet, daß** die Umsetzplatte (41; 61) zwischen der ersten und der zweiten Betriebsstellung mittels einer Schwinge (45; 72) bewegbar ist, daß die Schwinge (45; 72) einen zumindest während eines Teiles des Bewegungsablaufes außerhalb der Umsetzplatte (41; 61) liegenden Gelenkpunkt (54; 76) aufweist, und daß eine servomechanische Verstelleinheit an dem Gelenkpunkt (54; 76) angreift.

12. Handlingsystem nach Anspruch 11, **dadurch gekennzeichnet, daß** die Verstelleinheit im Bereich der zweiten Ebene (28) angeordnet ist.

13. Handlingsystem nach Anspruch 12, **dadurch gekennzeichnet, daß** die Verstelleinheit unterhalb der zweiten Ebene (28) angeordnet ist.

14. Handlingsystem nach einem oder mehreren der Ansprüche 11 bis 13, **dadurch gekennzeichnet, daß** die Verstelleinheit eine an einem raumfesten Gelenkpunkt (58; 83) angelenkte Kolben-Zylinder-Einheit (56a; 81) ist.

15. Handlingsystem nach einem oder mehreren der Ansprüche 11 bis 13, **dadurch gekennzeichnet, daß** die Umsetzplatte (41) an mindestens einem Rand (52; 44) mittels eines Gleitlagers (50; 48) in einer sich parallel zu einer der Ebenen (15; 43; 63; 28)erstreckenden Gleitschiene (51; 49) geführt ist, daß die Gleitschiene (51; 49) parallel zu der Ebene (15; 43; 63; 28) verschiebbar gelagert ist, und daß die Verstelleinheit eine an der verschiebbaren Gleitschiene (51) angelenkte Kolben-Zylinder-Einheit (56) ist.

## Claims

1. Handling system for a plastics injection moulding machine (10), comprising an arm (19) for removing plastic articles (14) from mould cavities (13) of a mould (11) of the plastics injection moulding machine (10), wherein the mould cavities (13) are arranged in a first plane (15; 43; 63) and the arm (19) moves in the first plane (15; 43; 63), a conveyor device (25) moving in a second plane (28) for conveying away the plastic articles (14), and a transfer station (29; 40; 60) arranged between the mould (11) and the conveyor device (25) for transferring the unloaded plastic articles (14) from the first plane (15; 43; 63) into the second plane (28), the transfer station (29; 40; 60) comprising a transfer plate (30; 41; 61) for the plastic articles (14) and being movable along a predetermined movement path (37; 53; 88) from a first operating position in the first plane (15; 43; 63) into a second operating position in the second plane (28), the movement path (53; 88) extending outside the first plane (43; 63), **characterised in that** the transfer plate (41; 61), with a first rim (52; 64; 84a), is arranged in the region of the second plane (28) and, during movement from the first into the second operating position, with the first rim(52; 64; 84a), is movable parallel to the second plane (28) in the. direction away from the first plane (43; 63).

2. Handling system according to claim 1, **characterised in that** the first plane (43; 63) extends vertically.

3. Handling system according to claim 1 or 2, **characterised in that** the second plane (28) extends horizontally.

4. Handling system according to claim 3, **characterised in that** the conveyor device (25) comprises a conveyor belt (26).

5. Handling system according to one or more of claims 1 to 4, **characterised in that** the plastic articles (14) are arranged in groups in the first plane (43; 63) and the arm (19) and the transfer plate (30; 41; 61) have receiving devices for a group of plastic articles.

6. Handling system according to claim 1, **characterised in that** the transfer plate (41; 61) has a second rim (44; 84) opposing the first rim (52; 64), and **in that** the second rim (44; 68) is guided along the first plane (43; 63) during the transition between the first and the second operating position.

7. Handling system according to claim 1 or 6, **characterised in that** the transfer plate (41; 61a) is provided with a sliding bearing (50; 85a) in the region of the first rim (52; 64), the sliding bearing being displaceable along a slide rail (51; 86a) extending parallel to the second plane (28).

8. Handling system according to claim 6 or 7, **characterised in that** the transfer plate (41; 61) is provided with a sliding bearing (48; 85) in the region of the second rim (44; 84), the sliding bearing being displaceable along a slide rail (49; 86) extending parallel to the first plane (43; 63).

9. Handling system according to claim 6 or 7, **characterised in that** the transfer plate (61) is provided with an articulation (65) in the region of the first rim (64), the articulation being displaceable along a circular path (68) extending substantially tangentially to the second plane (28).

10. Handling system according to claim 6 or 7, **characterised in that** the transfer plate (61a) is provided with an articulation (65a) in the region of the second rim (64a), the articulation being displaceable along a circular path (68a) extending substantially tangentially to the first plane (63a).

11. Handling system according to one or more of claims 1 to 10, **characterised in that** the transfer plate (41, 61) can be moved between the first and the second operating position by means of a rocker (45; 72), **in that** the rocker (45; 72) has an articulation point (54; 76) located outside the transfer plate (41; 61) at least during a part of the movement sequence and **in that** a servo-mechanical actuator engages on the articulation point (54; 76).

12. Handling system according to claim 11, **characterised in that** the actuator is arranged in the region of the second plane (28) .

13. Handling system according to claim 12, **characterised in that** the actuator is arranged underneath the second plane (28).

14. Handling system according to one or more of claims 11 to 13, **characterised in that** the actuator is a piston/cylinder unit (56a; 81) articulated to a stationary articulation point (58; 83).

15. Handling system according to one or more of claims 11 to 13, **characterised in that** the transfer plate (41) on at least one rim (52; 44) is guided by means of a sliding bearing (50; 48) in a slide rail extending parallel to one of the planes (15; 43; 63; 28), **in that** the guide rail (51; 49) is displaceably mounted parallel to the plane (15; 43; 63; 28), and **in that** the actuator is a piston/cylinder unit (56) articulated to the displaceable slide rail (51).

## Revendications

1. Système de manipulation pour une machine à mouler par injection des matières plastiques (10), avec un bras (19) pour enlever des articles en matière plastique (14) des cavités (13) d'un moule (11) de la machine à mouler par injection des matières plastiques, les cavités (13) étant placées sur un premier niveau (15 ; 43 ; 63), et le bras (19) se déplaçant sur le premier niveau (15 ; 43 ; 63), avec un dispositif de convoyage (25) se déplaçant sur le deuxième niveau (28) pour l'enlèvement des articles en matière plastique (14), et avec un poste de transfert (29 ; 40 ; 60), placé entre le moule (11) et le dispositif de convoyage (25), pour transférer les articles en matière plastique enlevés (14) depuis le premier niveau (15 ; 43 ; 63) vers le deuxième niveau (28), le poste de transfert (29 ; 40 ; 60) présentant une plaque de transfert (30 ; 41 ; 61) pour les articles en matière plastique qui est mobile le long d'une trajectoire de déplacement prédéterminée (37 ; 53 ; 88) depuis une première position de service au premier niveau (15 ; 43 ; 63) vers une deuxième position de service au deuxième niveau (28), la trajectoire de déplacement (53 ; 88) passant à l'extérieur du premier niveau (43 ; 63),
**caractérisé en ce que** la plaque de transfert (41 ; 61) se trouve, avec un premier bord (52 ; 64 ; 84a) dans la zone du deuxième niveau (28) et peut se déplacer en direction du premier niveau (43 ; 63) lors du déplacement depuis la première position de service vers la deuxième avec le premier bord (52 ; 64 ; 84a) parallèlement au deuxième niveau (28).

2. Système de manipulation selon revendication 1, **caractérisé en ce que** le premier niveau (43, 63) s'étend verticalement.

3. Système de manipulation selon revendication 1 ou 2, **caractérisé en ce que** le deuxième niveau (28) s'étend horizontalement.

4. Système de manipulation selon revendication 3, **caractérisé en ce que** le dispositif de convoyage (25) comprend une bande transporteuse (26).

5. Système de manipulation selon l'une quelconque ou plusieurs des revendications 1 à 4, **caractérisé en ce que** les articles en matière plastique (14) sont placés en groupes sur le premier niveau (43 ; 63), le bras (19) et la plaque de transfert (30 ; 41 ; 61) présentant des dispositifs pour loger un groupe d'articles en matière plastique.

6. Système de manipulation selon revendication 1, **caractérisé en ce que** la plaque de transfert (41 ; 61) présente un deuxième bord (44 ; 84) situé en face du premier bord (52 ; 64) et **en ce que** le deuxième bord (44 ; 68) passe le long du premier niveau (43 ; 63) lors du passage entre la première et la deuxième position de service.

7. Système de manipulation selon revendication 1 ou 6, **caractérisé en ce que** la plaque de transfert (41 ; 61a) est dotée, dans la zone du premier bord (52 ; 64) d'un palier lisse (50 ; 85a) pouvant être déplacé le long d'une glissière (51 ; 86a) parallèle au deuxième niveau (28).

8. Système de manipulation selon revendication 6 ou 7, **caractérisé en ce que** là plaque de transfert (41 ; 61) est dotée, dans la zone du deuxième bord (44 ; 84) d'un palier lisse (48 ; 55) pouvant être déplacé le long d'une glissière (49 ; 86) parallèle au premier niveau (43 ; 63).

9. Système de manipulation selon revendication 6 ou 7, **caractérisé en ce que** la plaque de transfert (61) est dotée, dans la zone du premier bord (64), d'une articulation (65) pouvant être déplacée le long d'une trajectoire circulaire (68) sensiblement tangente au deuxième niveau (28).

10. Système de manipulation selon revendication 6 ou 7, **caractérisé en ce que** la plaque de transfert (61a) est dotée, dans la zone du deuxième bord (64a), d'une articulation (65a) pouvant être déplacée le long d'une trajectoire circulaire (68a) sensiblement tangente au premier niveau (63a).

11. Système de manipulation selon l'une quelconque ou plusieurs des revendications 1 à 10, **caractérisé en ce que** la plaque de transfert (41 ; 61) est déplaçable entre la première et la deuxième position de service au moyen d'une bielle oscillante (45 ; 72), **en ce que** la bielle oscillante (45 ; 72) présente un point d'articulation (54 ; 76) situé à l'extérieur de la plaque de transfert (41 ; 61) au moins pendant une partie du déplacement et **en ce qu'**une unité de déplacement servomécanique agit sur le point d'articulation (54 ; 76).

12. Système de manipulation selon revendication 11, **caractérisé en ce que** l'unité de déplacement se trouve dans la zone du deuxième niveau (28).

13. Système de manipulation selon revendication 12, **caractérisé en ce que** l'unité de déplacement se trouve au-dessous du deuxième niveau (28).

14. Système de manipulation selon l'une quelconque ou plusieurs des revendications 11 à 13, **caractérisé en ce que** l'unité de déplacement est un module à pistons et à cylindres (56a ; 81) articulé sur un point d'articulation fixe dans l'espace (58 ; 83).

15. Système de manipulation selon l'une quelconque ou plusieurs des revendications 11 à 13, **caractérisé en ce que** la plaque de transfert (41) passe sur au moins un bord (52 ; 44), au moyen d'un palier lisse (50 ; 48) dans une glissière parallèle à l'un des niveaux (15 ; 43 ; 63 ; 28), **en ce que** la glissière (51 ; 49) peut coulisser parallèlement au niveau (15 ; 43 ; 63 ; 28) et **en ce que** l'unité de déplacement est un module à pistons et à cylindres (56) articulé sur la glissière coulissante (51 ).
